(19) Europäisches Patentamt / European Patent Office / Office européen des brevets

(11) **EP 3 713 220 B1**

(12) **EUROPEAN PATENT SPECIFICATION**

(45) Date of publication and mention
of the grant of the patent:
**22.02.2023 Bulletin 2023/08**

(21) Application number: **18879128.9**

(22) Date of filing: **29.10.2018**

(51) International Patent Classification (IPC):
$H04N\ 5/262$ (2006.01)  $H04N\ 5/265$ (2006.01)
$H04N\ 21/426$ (2011.01)  $G06F\ 3/0488$ (2013.01)
$G06F\ 3/04845$ (2022.01)  $H04N\ 5/232$ (2006.01)
$G06T\ 11/60$ (2006.01)  $G11B\ 27/031$ (2006.01)
$G11B\ 27/34$ (2006.01)  $H04N\ 21/431$ (2011.01)
$H04N\ 21/472$ (2011.01)  $G06K\ 9/00$ (2006.01)

(52) Cooperative Patent Classification (CPC):
H04N 5/265; G06F 3/04845; G06F 3/0488;
G06T 11/60; G11B 27/031; G11B 27/34;
H04N 21/42653; H04N 21/4316; H04N 21/47205;
H04N 23/611; H04N 23/631; H04N 23/632;
G06V 40/168

(86) International application number:
**PCT/CN2018/112304**

(87) International publication number:
**WO 2019/095979 (23.05.2019 Gazette 2019/21)**

(54) **VIDEO IMAGE PROCESSING METHOD AND APPARATUS, AND TERMINAL**

VERFAHREN UND VORRICHTUNG ZUR VIDEOBILDVERARBEITUNG SOWIE ENDGERÄT

PROCÉDÉ ET APPAREIL DE TRAITEMENT D'IMAGE VIDÉO, ET TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2017 CN 201711124135**

(43) Date of publication of application:
**23.09.2020 Bulletin 2020/39**

(73) Proprietor: **Tencent Technology (Shenzhen)
Company Limited
Shenzhen, Guangdong 518057 (CN)**

(72) Inventor: **LUO, Shuang
Shenzhen 518057 (CN)**

(74) Representative: **Gunzelmann, Rainer
Wuesthoff & Wuesthoff
Patentanwälte PartG mbB
Schweigerstraße 2
81541 München (DE)**

(56) References cited:
**EP-A1- 2 394 714       EP-A1- 2 988 486
WO-A2-2015/130867   WO-A2-2016/069669
CN-A- 105 635 519     CN-A- 105 677 107
CN-A- 106 303 690     CN-A- 106 385 591
CN-A- 107 291 346     CN-A- 107 888 845
US-A1- 2010 141 784   US-A1- 2014 176 601
US-A1- 2015 253 974   US-B1- 9 601 086**

## Description

This application claims priority to Chinese Patent Application No. 201711124135.9, entitled "Video Image Processing Method, Apparatus and Terminal", filed with the Chinese Patent Office on November 14, 2017.

## Technical Field

The present disclosure relates to the technical field of image processing, and particularly to a video image processing method, a video image processing apparatus and a terminal.

## Background Art

At present, most applications supporting video recording (such as a video and photography application, an instant messaging application supporting video calls, or a video live streaming application) usually provide a function of adding special effects to video images in order to meet the individual requirements of users; adding special effects to a video image requires the use of special effect materials such as virtual face pendants (e.g., virtual face pendants such as mustaches and animal ears that can be superposed on a human face in a video image) and a filter (the filter can adjust the background theme of the video image, and for example is a cartoon filter or a comic filter).

At present, the source of the special effect materials is mainly that a producer makes the special effect materials and then uploads the special effect materials to a webpage, or that a service provider presets the special effect materials in an application; when the special effect materials are used at a terminal, the special effect materials need to be downloaded in advance or downloaded at the time of using them. However, these special effect materials are often used for static pictures; for a dynamic video image, when a terminal adds special effects thereto, there are certain limitations to the special effect materials which can be used; and how to reduce the limitations of using the special effect materials and more flexibly add special effects to video images becomes an issue yet to be considered by a person skilled in the art.

EP 2 394 714 A1 concerns an image processing method in which data of a coordinate input provided on a second image displayed on a display device is acquired, and input position data representing the coordinate input provided on the second image is generated. At least a first feature point is extracted from a first image, the first feature point being a feature point having a first feature on the first image; a predetermined superimposition image is superimposed on the first image, at a position on the first image based on the first feature point, the position corresponding to a position, represented by the input position data, on the second image based on a second feature point, the second feature point being a feature point having the first feature on the second image; and the first image on which the superimposition has been made is displayed on the display device.

WO 2016/069669 A2 concerns a method comprising: displaying a UI for display of received video; detecting selection of a UI button; receiving a plurality of drawing inputs whilst the button is selected, each drawing input defining image data to be applied at a facial position on a first side of a face of a user displayed in the received video; for each drawing input, determining a further facial position on a second side of the face, that is symmetrically opposite to the facial position; and for each received video frame, the method comprises: for each drawing input (i) determining a position of the face in the frame by executing an algorithm to determine the locations of the facial position and determined further facial position on the face in the frame; and (ii) applying the image data to the facial position and the determined further facial position; and displaying the modified frame in the UI.

## Summary of the Invention

Therefore, embodiments of the present disclosure provide a video image processing method according to claim 1, a video image processing apparatus according to claim 11 and a terminal according to claim 12, so as to reduce the limitations of using special effect materials and improve the flexibility of adding special effects to video images.

In order to achieve the above objectives, the embodiments of the present disclosure provide the following technical solution:

A video image processing method is provided, which includes:

> displaying an acquired video image on a screen;
> detecting operation points of a user on the screen, and converting screen coordinates of the operation points into target canvas coordinates on a target canvas;
> drawing a graph on the target canvas according to the target canvas coordinates of the operation points; and
> superposing the target canvas drawn with the graph on the video image.

The embodiments of the present disclosure further provide a video image processing apparatus, which includes:

a video image display module to display an acquired video image on a screen;
a coordinate conversion module to detect operation points of a user on the screen and convert screen coordinates of the operation points into target canvas coordinates on a target canvas;
a graph drawing module to draw a graph on the target canvas according to the target canvas coordinates of the operation points; and
a superposition module to superpose the target canvas drawn with the graph on the video image.

The embodiments of the present disclosure further provide a terminal, which includes: a memory, a processor, and a graphics processor; the memory stores an executable program executable by the processor or the graphics processor to:

display an acquired video image on a screen;
detect operation points of a user on the screen, and convert screen coordinates of the operation points into target canvas coordinates on a target canvas;
draw a graph on the target canvas according to the target canvas coordinates of the operation points; and
superpose the target canvas drawn with the graph on the video image.

The embodiments of the present disclosure further provide a storage medium for storing executable instructions that, when executed on a computer, cause the computer to perform the video image processing method described herein.

The embodiments of the present disclosure further provide a computer program product including instructions that, when executed on a computer, cause the computer to perform the video image processing method described herein.

Based on the technical solution, the video image processing method provided by the embodiments of the present disclosure includes the following steps: after displaying an acquired video image on a screen, detecting operation points related to graffiti drawn by a user on the screen, and converting screen coordinates of the operation points into target canvas coordinates on a target canvas; further, drawing a graph on the target canvas according to the target canvas coordinates of the operation points, superposing the target canvas drawn with the graph on the video image, so as to achieve the effect of adding the special effect of the graffiti graph by the user on the video image.

According to the embodiments of the present disclosure, a corresponding graph may be drawn on a target canvas in a memory according to respective operation points involved in graffiti drawn by a user on a screen, and the target canvas drawn with the graph may be used as special effect materials, therefore the content of the special effect materials may be adjusted according to different graffiti operations by the user on the screen (i.e. different operation points involved in the graffiti drawn by the user on the screen), such that the content of the special effect materials may be adjusted individually by the user, the content of the video special effects which can be added on the video image is richer and more varied, the limitation of using the special effect materials is reduced, and the flexibility of adding the special effects to the video image is improved. For example, under a scene of user selfie, video call or the like, based on the video image processing method provided by the embodiments of the present disclosure, special effect materials drawn by the user may be added on images such as selfies or video call images; further, the drawn special effect materials are added to the video images in a sticker manner, such that the effect that the drawn special effect materials move as a human face in a dynamic video image moves may be achieved in the dynamic video image correspondingly acquired under the scene such as selfie, video call or the like.

**Brief Description of the Drawings**

In order to more clearly illustrate the technical schemes in the embodiments of the present disclosure or the existing art, the accompanying drawings required to be used in the description of the embodiments or the existing art will be briefly described below. Apparently, the drawings in the description below are some embodiments of the present disclosure, and a person of ordinary skill in the art would obtain other drawings from these drawings provided herein without involving any inventive effort.

FIG. 1 is a flowchart of a video image processing method provided according to embodiments of the present disclosure;
FIG. 2 is a schematic diagram of an operation on an interface to enter a graffiti mode;
FIG. 3 is a schematic diagram of using embodiments of the present disclosure;
FIG. 4 is a flowchart of a method of converting screen coordinates of each operation point into target canvas coordinates;
FIG. 5 is a schematic diagram of a normalized virtual canvas;
FIG. 6 is a flowchart of another method of converting screen coordinates of each operation point into target canvas coordinates;

FIG. 7 is a flowchart of yet another method of converting screen coordinates of each operation point into target canvas coordinates;

FIG. 8 is a schematic diagram of a virtual canvas after rotation;

FIG. 9 is a schematic diagram of an application framework incorporating a painter filter;

FIG. 10 is a block diagram of a video image processing apparatus provided by embodiments of the present disclosure;

FIG. 11 is a block diagram of hardware configuration of a terminal.

**Detailed Description of the Invention**

The technical schemes in the embodiments of the present disclosure will be described clearly and completely below with reference to the accompanying drawings of the embodiments of the present disclosure. Apparently, the embodiments described herein are only some embodiments of the present disclosure, but not all of embodiments. Based on the embodiments of the present disclosure, all other embodiments obtained by a person of ordinary skill in the art without involving any inventive effort are within the protection scope of the present disclosure.

The embodiments of the present disclosure may support a user in performing a graffiti operation on a video image, and a corresponding graph may be drawn on a canvas according to the graffiti operation of the user, so as to superpose the canvas on the video image, and realize the purpose of adding a special effect on the video image. According to the embodiments of the present disclosure, the canvases of corresponding graphs drawn based on the graffiti operations of the user may be used as special effect materials, such that the content of the special effect materials may be flexibly changed according to different graffiti operations of the users, thereby reducing the limitation of using the special effect materials, and improving the flexibility of adding special effects to video images.

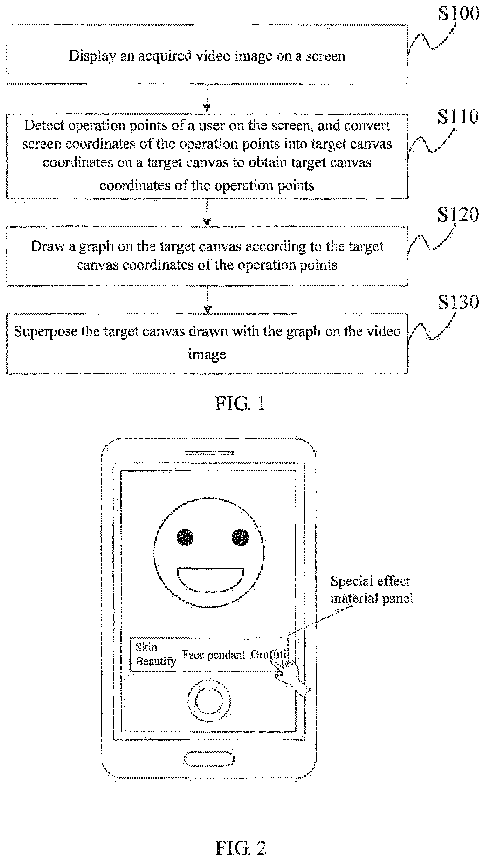

Under this idea, FIG. 1 shows a flowchart of a video image processing method provided according to embodiments of the present disclosure, and the method may be applied to a terminal which may be a user device such as a smart phone, a tablet computer, or a notebook computer used by a user; according to the embodiments of the present disclosure, a program corresponding to the video image processing method may be loaded in the terminal and executed by the terminal to implement the video image processing method provided by the embodiments of the present disclosure.

Alternatively, the program may be executed by a GPU (Graphics Processing Unit) of the terminal; in an alternative implementation, the embodiments of the present disclosure may implement the video image processing method provided by the embodiments of the present disclosure through OpenGL (Open Graphics Library) of the CPU, e.g., executing the program through OpenGL of the GPU to implement the video image processing method provided by the embodiments of the present disclosure.

Referring to FIG. 1, the video image processing method may include:

Step S100, displaying an acquired video image on a screen.

When a user is under a scenario of selfie, video call, or video live streaming, the user may start an application which is installed in the terminal and supports video recording, and call an image acquisition device such as a camera of the terminal through the application to acquire video images, and the acquired video images may be returned to the application and displayed on a screen of the terminal. It is to be understood that the video images referred to in the embodiments of the present disclosure may be images at the time of video recording or preview images prior to the video recording. The preview image refers to an image acquired by the image acquisition device such as the camera before shooting, and it may change as the camera moves. For example, when the user calls the camera of the terminal through the application to execute a video recording operation, he may move the position of the terminal so as to move the position of the camera, and during the moving process, an image of a corresponding position is displayed on the screen of the terminal, and the image is the preview image. It should also be noted that the video image processing method of the embodiments of the present disclosure may also be used in other scenarios. For example, the image acquired by the image acquisition device such as the camera may also be used as a video image before a user takes a picture with the camera. As the camera moves, the image acquired by the image acquisition device also changes. That is, the video image displayed on the screen changes.

Alternatively, the form of the application supporting video recording may be determined according to an actual situation; for example, in the selfie scenario, it may be a video and photography application; in the video call scenario, it may be an instant messaging application; in the video live streaming scenario, it may be a video live streaming application.

Step S110, detecting respective operation points of a user on the screen, and converting screen coordinates of the respective operation points into target canvas coordinates on a target canvas to obtain target canvas coordinates of the respective operation points.

After entering a graffiti mode, the user may use his finger, a stylus or the like as a paintbrush to draw graffiti on the screen of the terminal; according to the embodiments of the present disclosure, respective operation points of the user on the screen may be detected, and screen coordinates of the respective operation points are recorded based on an operation sequence of the operation points, so that the screen coordinates of the respective operation points are respectively converted into target canvas coordinates on a target canvas according to the operation sequence of the operation points.

In a particular implementation, the terminal may detect the respective operation points of the user on the screen in response to a user-triggered operation to enter the graffiti mode. There may be various user-triggered operations to enter the graffiti mode, in which one operation may be clicking on an icon corresponding to the graffiti mode on a special effect material panel, and another operation may be a long-press operation of the user on the screen of the terminal.

Alternatively, a manner of entering the graffiti mode based on the user operation is for example shown in FIG. 2. A special effect material panel may be unfolded and displayed on the screen based on the user operation, and may display special effect materials such as a traditional virtual face pendant, a filter and the like. An icon for triggering the graffiti mode to be entered is added on the special effect material panel in the embodiments of the present disclosure, and the graffiti mode may be triggered to be entered when the user clicks on the icon. After entering the graffiti mode, the user may perform a graffiti operation on the screen displaying video images. Apparently, the icon to trigger the graffiti mode to be entered does not need to be added on the special effect material panel, and it may be displayed independently of the screen.

Further, after the user clicks on the icon to enter the graffiti mode, the screen may display prompt information that the user can perform the graffiti operation. For example, the screen may display prompt information "draw on the screen" so as to prompt the user to perform the graffiti operation subsequently.

Alternatively, the manner of entering the graffiti mode by clicking on the icon shown in FIG. 2 is only an option, and the embodiments of the present disclosure may also detect whether the user performs a preset operation such as a long-press operation (the preset operation such as the long-press operation may be set as an operation to start the graffiti operation of the user, and the preset operation may also be double-clicking on the screen and the like, and the form thereof is not fixed) on the screen after the video image is displayed on the screen, and if so, it is determined that the user has an intention to draw graffiti on the screen, which triggers the graffiti mode to be entered.

When entering the graffiti mode, the embodiments of the present disclosure request a memory space in a memory for the target canvas. The function of the target canvas is mainly to draw a corresponding graph on the target canvas based on the user operations on the screen so as to obtain special effect materials. It should be noted that the target canvas referred to herein is a canvas of which a memory space has been requested in a memory.

A size of the memory space requested for the target canvas is determined according to a preset size of the target canvas (the size of the target canvas herein refers to a resolution size of the target canvas) and the amount of memory per pixel. For example, the memory space may be requested for the target canvas according to the value of the size of the target canvas * the amount of memory per pixel ("*" represents multiplication). That is, the size of the memory space requested for the target canvas may be the size of the target canvas * the amount of memory per pixel. For example, if a preset resolution size of the target canvas is 512 * 512 (as one alternative example only), then the size of the memory space requested for the target canvas may be 512 * 512 * the amount of memory per pixel.

It should be noted herein that the target canvas coordinates refer to canvas coordinates to which the screen coordinates of the operation points are mapped on the target canvas of which the memory space is requested. Since the memory space in the embodiments of the present disclosure is requested for the target canvas, converting the screen coordinates of the respective operation points into the target canvas coordinates on the target canvas may be considered as mapping the respective operation points to the memory space corresponding to the target canvas.

Step S120, drawing a graph on the target canvas according to the target canvas coordinates of the respective operation points.

After converting the screen coordinates of the respective operation points into the target canvas coordinates on the target canvas, the embodiments of the present disclosure may determine the mapping points of the respective operation points on the target canvas according to the target canvas coordinates of the respective operation points, such that the mapping points of the respective operation points on the target canvas may be connected (for example, according to the operation sequence of the respective operation points) according to a paintbrush algorithm (for example, a straight line paintbrush and a texture paintbrush) to draw a corresponding graph.

It may be seen that drawing graffiti in the embodiments of the present disclosure may be referred to as that a user performs a drawing operation on a screen by using a finger or a stylus or the like as a paintbrush. The graph is drawn on the target canvas through the mapping points of the operation points related to the drawing operation on the target canvas. The graffiti mode referred to in the embodiments of the present disclosure is a mode that allows a user to perform a drawing operation on a screen through a finger or a stylus or the like.

It will be appreciated that a user may perform operations such as sliding on a screen by a finger or a stylus or the like, at least one operation track may be formed from the operation points on the screen, and a graph may be drawn on the target canvas to resemble the operation track by drawing based on the mapping points of the respective operation points on the target canvas.

Step S130, superposing the target canvas drawn with the graph on the video image.

The target canvas drawn with the graph may be used as special effect materials of a sticker type, and the target canvas drawn with the graph may be superposed on the video image on the basis of a principle of superposing a sticker on a video image.

Alternatively, the graph drawn on the target canvas may be superposed on the video image in real time, such that the user may adjust the graffiti operation to modify and adjust the graph based on the graph on the target canvas superposed on the video image in real time.

It is to be noted that the video image processing method provided by the embodiments of the present disclosure supports a user drawing graffiti on a video image. Specifically, an acquired video image is displayed on a screen, the user may trigger a graffiti mode to be entered based on the video image, and respective operation points of the graffiti drawn by the user on the screen are detected based on the graffiti mode. After screen coordinates of the respective operation points are converted into target canvas coordinates on a target canvas, a graph is drawn on the target canvas according to the target canvas coordinates of the respective operation points, and then the target canvas drawn with the graph is superposed on the video image as special effect materials to realize the graffiti effect on the video image. According to the video image processing method provided by the embodiments of the present disclosure, drawing graffiti in real time based on a dynamic video image may be made possible, which is fundamentally different from the traditional mode of drawing graffiti using a video image in the form of static image as a canvas.

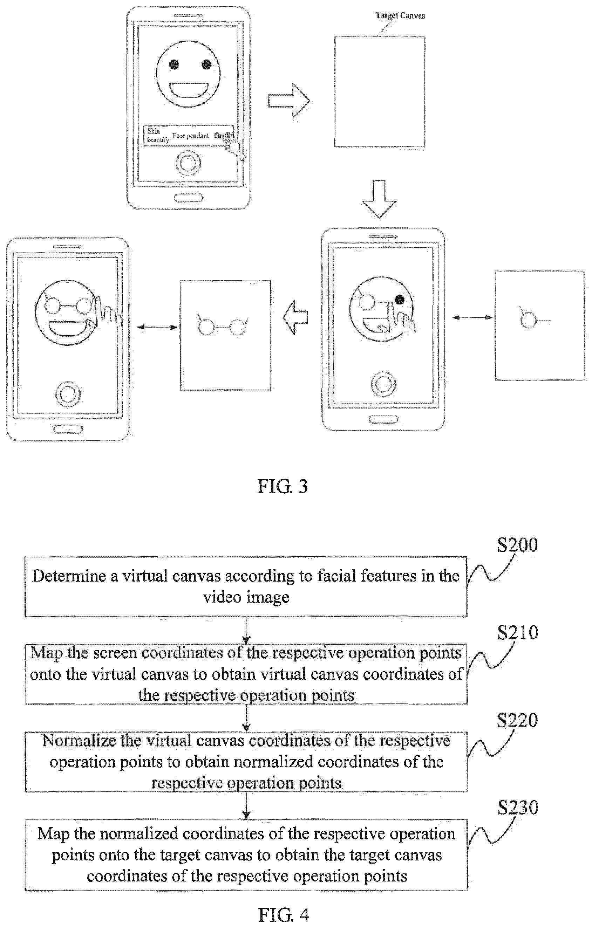

In an alternative implementation example, as shown in FIG. 3, a user opens a video and photography application on a terminal for taking a selfie, and a front camera of the terminal may acquire a video image containing the face of the user and display the video image on a screen of the terminal; the user clicks on a graffiti icon on a special effect material panel to trigger a graffiti mode, and the terminal may initialize a target canvas and request a memory space for the target canvas; moreover, the user may perform a graffiti operation on the screen by using a finger according to the position of the face of the user in the video image displayed on the screen. As shown in FIG. 3, the graffiti operation is performed by the user by sliding his finger on the screen, and the sliding track of the finger on the screen is similar to "glasses".

During the process of the finger of the user sliding on the screen, the terminal may record screen coordinates of the respective operation points on the screen involved in the sliding process, convert the screen coordinates of the respective operation points into target canvas coordinates on a target canvas to obtain corresponding mapping points of the respective operation points on the target canvas; therefore, according to the target canvas coordinates of the respective operation points, the mapping points of the respective operation points on the target canvas may be connected to draw a graph like "glasses" in shape on the target canvas.

The target canvas drawn with the graph like "glasses" in the shape may be superposed on the user's face in the video image in a sticker manner, and the effect that the graph like "glasses" on the target canvas moves as the face of the video image moves is achieved (the effect is similar to a dynamic effect sticker such as a virtual face pendant moving as the face in the video image moves), such that the objective of drawing graffiti on the user's face in the video image is achieved.

It should be noted that the user's finger in FIG. 3 actually draws graffiti by moving on the screen, and the graphical effect added to the video image displayed on the screen is actually an effect presented by superposing the target canvas on the video image after the target canvas is graphically rendered based on the graffiti drawn by the user's finger moving on the screen.

The manner in which the graffiti mode is triggered to be entered shown in the corresponding portion of FIG. 3 is optional only and may be considered as an exemplary illustration for ease of understanding.

The video image processing method provided by the embodiments of the present disclosure includes the following steps: after an acquired video image is displayed on a screen, if a graffiti mode is entered according to a user operation, a memory space is requested for a target canvas, so as to enable the target canvas to be cached in the memory; after the graffiti mode is entered, respective operation points related to the graffiti drawn by the user on the screen are detected, screen coordinates of the respective operation points are converted into target canvas coordinates on the target canvas to obtain the target canvas coordinates of the respective operation points; further, a graph is drawn on the target canvas according to the target canvas coordinates of the respective operation points, and the target canvas drawn with the graph is superposed on the video image, so as to achieve the effect of adding the special effect of the graffiti graph drawn by the user on the video image.

According to the embodiments of the present disclosure, a corresponding graph may be drawn on a target canvas in a memory according to respective operation points involved in graffiti drawn by a user on a screen, and the target canvas drawn with the graph may be used as special effect materials, therefore the content of the special effect materials may be adjusted according to different graffiti operations by the user on the screen (i.e. different operation points involved in the graffiti drawn by the user on the screen), such that the content of the special effect materials may be adjusted individually by the user, the content of the video special effects which can be added on the video image is richer and more varied, the limitation of using the special effect materials is reduced, and the flexibility of adding the special effects to the video image is improved. For example, under a scene of user selfie, video call or the like, based on the video image processing method provided by the embodiments of the present disclosure, special effect materials drawn by the user may be added on images such as selfies or video call images; further, the drawn special effect materials are added to the video images in a sticker manner, such that the effect that the drawn special effect materials move as a human face in a dynamic video image moves may be achieved in the dynamic video image correspondingly acquired under the scene such as selfie, video call or the like.

In an implementation of converting screen coordinates of operation points into target canvas coordinates on a target canvas, the embodiments of the present disclosure first render a virtual canvas (the virtual canvas is different from the target canvas for which a memory space is requested). The size of the virtual canvas is adjustable. Specifically, the size of the virtual canvas is in a preset proportional relationship with the size of a face area in a video image. The preset proportional relationship may be set according to actual requirements. As an example of the present disclosure, the virtual canvas may be scaled according to the size of the face centered on the nasal bridge of the face. In a particular implementation, the virtual canvas is assumed to be square, and the width of the virtual canvas is twice the distance between the eyes of the face. Then, the screen coordinates of the operation points are mapped to the virtual canvas to obtain virtual canvas coordinates of the respective operation points, and the virtual canvas coordinates of the respective operation points are mapped into the target canvas to obtain target canvas coordinates of the respective operation points on the target canvas.

This manner is applicable to a scene for adding a video special effect to a human face in a video image. Under the condition that the size of the memory space requested for the target canvas is fixed, the size of the target canvas is not suitable for the diversity of the human faces, and to be suitable to the diversity of the human faces, the virtual canvas is used. By using the virtual canvas as an intermediate state of converting the screen coordinates of the operation points to the target canvas coordinates, the conversion from the screen coordinates of the operation points to the target canvas coordinates on the target canvas may be more accurate.

Alternatively, FIG. 4 shows a flowchart of a method for converting screen coordinates of respective operation points to target canvas coordinates provided according to embodiments of the present disclosure, and the method may be applied to a terminal, such as a GPU of the terminal. Referring to FIG. 4, the method may include:
Step S200, determining a virtual canvas according to facial features in the video image.

The virtual canvas is different from the target canvas mentioned above, and a size of the virtual canvas is in a preset proportional relationship with a size of a face area in the video image. In the embodiments of the present disclosure, "size" may be represented by "resolution". The size of the target canvas, i.e. the resolution of the target canvas, is preset, and the size of the virtual canvas, i.e. the resolution of the virtual canvas, may be adjusted according to the resolution of the face in the video image. That is, for video images with different resolutions of faces, the resolutions of the correspondingly drawn virtual canvases may also be different. For example, when a user takes selfies, the resolutions of his faces in the video images are also different due to different distances between him and a camera. When a distance is relatively large, the resolution corresponding to the distance is relatively small. That is, the embodiments of the present disclosure may draw a virtual canvas according to facial features in a video image.

In an alternative implementation, the embodiments of the present disclosure may detect the coordinates of a first feature point on a face in a video image through a face detection technology (taking the face as an example, the first feature point may be a certain preset five-sense organ feature point of the face, such as the tip of the nose, the center point between the eyebrows, or the nose bridge, and the form of the first feature point of the face may be set according to actual conditions); determine the size of the virtual canvas according to the preset proportional relationship and the size of the face area in the video image, and then determine the virtual canvas according to the size of the virtual canvas by taking the coordinates of the first feature point of the face as the coordinates of the center point of the virtual canvas.

Alternatively, the preset proportional relationship may be set according to actual conditions, and the value of it may be adjusted automatically, as long as the virtual canvas can cover most of the screen.

Step S210, mapping the screen coordinates of the respective operation points onto the virtual canvas to obtain virtual canvas coordinates of the respective operation points.

Alternatively, after the virtual canvas is determined, for any operation point, the embodiments of the present disclosure may convert the screen coordinates of the operation point into coordinates on the virtual canvas according to the screen coordinates of the operation point and the screen coordinates of the center point of the virtual canvas (i.e. the coordinates of the first feature point on the human face in the video image), so as to obtain the virtual canvas coordinates of the operation point. In a particular implementation, for respective operation points, the terminal may calculate coordinate translation vectors according to the screen coordinates of the operation points and the screen coordinates of the center point of the virtual canvas, and then determine the virtual canvas coordinates of the respective operation points according to the coordinate translation vectors.

Apparently, the above-mentioned manner of converting the screen coordinates of the operation points into the coordinates on the virtual canvas is only optional, and the embodiments of the present disclosure may also record a mapping relationship between the coordinate system of the screen and the coordinate system of the virtual canvas, and determine the virtual canvas coordinates on the virtual canvas obtained by converting the screen coordinates of the operation points according to the mapping relationship.

Step S220, normalizing the virtual canvas coordinates of the respective operation points to obtain normalized coordinates of the respective operation points.

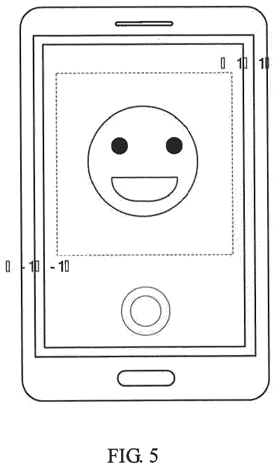

Alternatively, the embodiments of the present disclosure may set the size of a normalized virtual canvas which, for description purpose, may be denoted as specified normalization size. If after the virtual canvas is normalized, both x-axis and y-axis ranges of the virtual canvas are from -1 to 1, then the size of the virtual canvas may be determined to be 2 * 2, as shown in FIG. 5. Alternatively, the specified normalization size may be customized and adjusted according to actual conditions, and the width of the normalized virtual canvas may be set to be 4, etc. (e.g., the x-axis and y-axis ranges of the virtual canvas are from -2 to 2), in addition to setting the normalized virtual canvas to be square with a width of 2 as shown in FIG. 5.

After the specified normalization size is determined, the embodiments of the present disclosure may determine a first coordinate scaling ratio based on the size of the virtual canvas and the specified normalization size. For example, the first coordinate scaling ratio may be obtained by dividing the width of the normalized virtual canvas by the width of the virtual canvas as it is rendered.

By way of example, the width of the normalized virtual canvas is 2 and the width of the virtual canvas as it is rendered is 680, then the first coordinate scaling ratio is scale = 2/680.

After the first coordinate scaling ratio is obtained, initial normalized coordinates of the operation points on the virtual canvas may be determined according to the coordinates of the operation points on the virtual canvas and the first coordinate scaling ratio; for example, the coordinates of the operation points on the virtual canvas are multiplied by the first coordinate scaling ratio to obtain the initial normalized coordinates of the operation points on the virtual canvas.

Alternatively, the manner of determining the initial normalized coordinates of the operation points on the virtual canvas shown above is optional, the embodiments of the present disclosure may also set a mapping relationship between the coordinate system of the virtual canvas and the coordinate system of the normalized virtual canvas, and the initial normalized coordinates of the respective operation points are obtained according to the mapping relationship.

After obtaining the initial normalized coordinates of the respective operation points on the virtual canvas, the subsequent processing of obtaining the normalized coordinates of the respective operation points may be performed according to situations where a rotation angle of the human face in the video image is 0 and not 0.

Specifically, if the rotation angle of the human face in the video image is 0, the initial normalized coordinates of the operation points on the virtual canvas may be directly determined as the normalized coordinates of the operation points. That is, if the initial normalized coordinates of the operation points on the virtual canvas are obtained, the normalized coordinates of the operation points are determined to be obtained.

If the rotation angle of the human face in the video image is not 0, after the initial normalized coordinates of the respective operation points are obtained, the initial normalized coordinates of the respective operation points need to be reversely rotated by the rotation angle to obtain the normalized coordinates of the respective operation points.

Step S230, mapping the normalized coordinates of the respective operation points onto the target canvas to obtain the target canvas coordinates of the respective operation points.

After obtaining the normalized coordinates of the respective operation points, the embodiments of the present disclosure may determine a second coordinate scaling ratio according to the size of the target canvas and the specified normalization size; for example, the second coordinate scaling ratio is obtained by dividing the width of the target canvas by the width of the normalized virtual canvas.

In this way, for any operation point, the target canvas coordinates of the operation point on the target canvas are obtained according to the normalized coordinates of the operation point and the second coordinate scaling ratio; for example, the x-axis target canvas coordinate of the operation point is obtained by adding a set value with the normalized x-axis coordinate of the operation point and then multiplying the addition result by the second coordinate scaling ratio, and the y-axis target canvas coordinate of the operation point is obtained by subtracting the normalized y-axis coordinate of the operation point from the set value and then multiplying the subtraction result by the second coordinate scaling ratio, and the x-axis target canvas coordinate and the y-axis target canvas coordinate of the operation point are combined to obtain the target canvas coordinates of the operation point on the target canvas.

Alternatively, the set value may be customized according to actual conditions; specifically, it may be determined according to the size of the virtual canvas. By way of example, the size of the virtual canvas is 2*2, the center point of the virtual canvas is the origin of it, while the target canvas uses the mapping point of the top-left vertex of the virtual canvas on the target canvas as its origin, the positive direction of the x axis is rightward, the positive direction of the y axis is downward, the set value is set to be 1. For normalized coordinates $(x', y')$ of an operation point, the center point is firstly translated to obtain $(1+x', 1-y')$, and the second coordinate scaling ratio is 512/2 (where 512 is assumed to be the width of the target canvas, and 2 is assumed to be the width of the normalized virtual canvas), target canvas coordinates of the operation point on the target canvas may be obtained by: $(1+x', 1-y') *512/2$.

Alternatively, the steps S220 to S230 are merely an alternative manner of converting the coordinates of the respective operation points on the virtual canvas into the target canvas coordinates of the respective operation points on the target canvas. The embodiments of the present disclosure may also set a coordinate mapping relationship between the virtual canvas and the target canvas so as to convert the coordinates of the respective operation points on the virtual canvas to the target canvas coordinates on the target canvas according to the coordinate mapping relationship.

When graffiti is drawn on the face in the video image according to the embodiments of the present disclosure, the virtual canvas serves as an intermediate state of coordinate conversion from the screen coordinates of the operation points to the target canvas coordinates, and the virtual canvas drawn based on the face in the video image may be used to adapt to diversities of face, so as to make the conversion from the screen coordinates of the operation points to the target canvas coordinates of the target canvas more accurate, and improve the accuracy of the subsequent superposition of the target canvas drawn with the graph on the face in the video image.

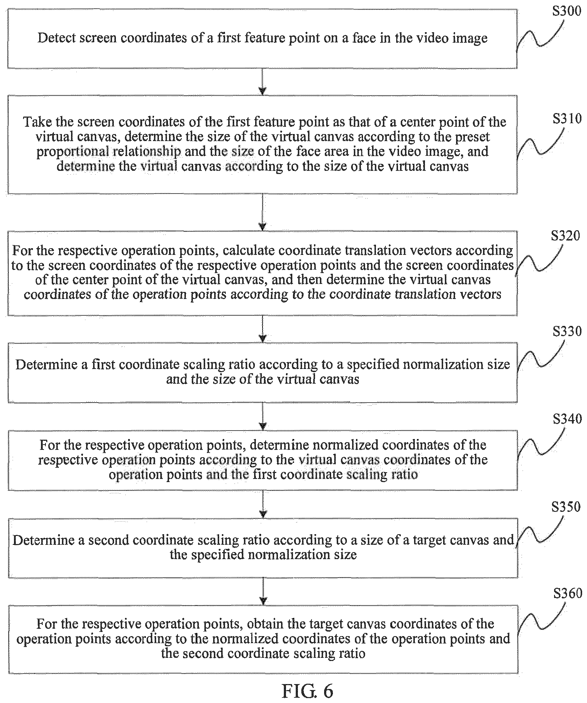

Alternatively, in the case where the rotation angle of the human face in the video image is 0, FIG. 6 shows a flowchart of another method of converting the screen coordinates of the respective operation points into the target canvas coordinates provided according to embodiments of the present disclosure, and referring to FIG. 6, the method may include:

Step S300, detecting screen coordinates of a first feature point on a face in the video image.

Step S310, taking the screen coordinates of the first feature point on the face as that of a center point of the virtual canvas, determining the size of the virtual canvas according to the preset proportional relationship and the size of the face area in the video image, and determining the virtual canvas according to the size of the virtual canvas.

Alternatively, the steps S300 to S310 may be considered as an alternative implementation of the step S200 shown in FIG. 4 where the rotation angle of the human face in the video image is 0.

Step S320, for the respective operation points, calculating coordinate translation vectors according to the screen coordinates of the respective operation points and the screen coordinates of the center point of the virtual canvas, and then determining the virtual canvas coordinates of the operation points according to the coordinate translation vectors.

A coordinate translation vector may be obtained by performing a subtraction operation between the screen coordinates of an operation point and the screen coordinates of the center point of the virtual canvas. Since the virtual canvas is obtained by translating the center point, the component in the x direction in the coordinate translation vector may be regarded as the x-axis coordinate in the virtual canvas, and the component in the y direction may be regarded as the y-axis coordinate in the virtual canvas, such that the coordinates of the operation point on the virtual canvas are obtained by subtracting the x-axis coordinate of the center point of the virtual canvas from the x-axis screen coordinate of the operation point, and subtracting the y-axis coordinate of the center point of the virtual canvas from the y-axis screen coordinate of the operation point. The coordinates of the operation point on the virtual canvas are the virtual canvas coordinates of the operation point. Alternatively, the step S320 may be considered as an implementation in which the screen coordinates of the operation points are mapped into the virtual canvas to obtain the virtual canvas coordinates of the operation points at the step S210 shown in FIG. 4.

In an alternative implementation, assuming that the coordinates of the center point of the virtual canvas (i.e., the coordinates of the first feature point on the human face in the video image) are P1 (360, 500) and the screen coordinates of an operation point are P0 (120, 660), the coordinates of the operation point after conversion on the virtual canvas may be: P2=(120-360, 660-500)=(-240,160); that is, the coordinates of the operation point after conversion on the virtual canvas may be obtained by subtracting the x-axis coordinate of the center point of the virtual canvas from the x-axis screen coordinate of the operation point, and subtracting the y-axis coordinate of the center point of the virtual canvas from the y-axis screen coordinate of the operation point.

That is, assuming that the coordinates of the center point of the virtual canvas are P1 (P1x, P1y) and the screen coordinates of an operation point are P0 (P0x, P0y), the coordinates of the operation point after conversion on the virtual canvas, i.e. the virtual canvas coordinates are P2 (P2x, P2y) = (P0x-P1x, P0y-P1y).

Alternatively, the step S320 is a process based on a two-dimensional coordinate system. In a three-dimensional coordinate system where the face detection also supports Euler angle detection (the angles between the rotation angle of the face and the x, y and z axes in the three-dimensional space), after subtracting the x-axis coordinate of the center point of the virtual canvas from the x-axis screen coordinate of the operation point, and the y-axis coordinate of the center point of the virtual canvas from the y-axis screen coordinate of the operation point, the subtraction result needs to be multiplied by a three-dimensional rotation matrix to obtain the coordinates of the operation point on the virtual canvas.

The form of the three-dimensional rotation matrix is as follows:

$$M(\alpha,\beta,\gamma) = \begin{bmatrix} \cos\alpha\cos\gamma - \cos\beta\sin\alpha\sin\gamma & -\cos\beta\cos\gamma\sin\alpha - \cos\alpha\sin\gamma & \sin\alpha\sin\beta \\ \cos\gamma\sin\alpha + \cos\alpha\cos\beta\sin\gamma & \cos\alpha\cos\beta\cos\gamma - \sin\alpha\sin\gamma & -\cos\alpha\sin\beta \\ \sin\beta\sin\gamma & \cos\gamma\sin\beta & \cos\beta \end{bmatrix}$$

Step S330, determining a first coordinate scaling ratio according to a specified normalization size and the size of the virtual canvas.

Alternatively, for example, the first coordinate scaling ratio may be obtained by dividing the width of the normalized virtual canvas by the width of the virtual canvas as it is rendered.

Step S340, for the respective operation points, determining normalized coordinates of the respective operation points according to the virtual canvas coordinates of the operation points and the first coordinate scaling ratio.

Alternatively, for example, the normalized coordinates of the operation points may be obtained by multiplying the virtual canvas coordinates of the operation points by the first coordinate scaling ratio.

Alternatively, the embodiments of the present disclosure may multiply the virtual canvas coordinates P2 of an operation point by the first coordinate scaling ratio "scale" to obtain the normalized coordinates of the operation point on the virtual canvas; by way of example, assuming that the coordinates of the operation point on the virtual canvas are P2 (-240, 160) and the first coordinate scaling ratio "scale" is 2/680, then the normalized coordinates of the operation point on the virtual canvas are P2 * scale = (-240, 160) * 2/680 = (-0.706, 0.471), and (-0.706, 0.471) are shown herein for ease of illustration as a rounding result of three decimal digits. However, in the actual case, they may be given in a customized manner.

Alternatively, the steps S330 to S340 may be considered as an implementation of the step S220 of FIG. 4.

Step S350, determining a second coordinate scaling ratio according to a size of a target canvas and the specified normalization size.

Alternatively, the second coordinate scaling ratio may be obtained by dividing the width of the target canvas by the width of the normalized virtual canvas.

Step S360, for the respective operation points, obtaining the target canvas coordinates of the operation points according to the normalized coordinates of the operation points and the second coordinate scaling ratio.

In a particular implementation, the x-axis target canvas coordinate of an operation point is obtained by adding a set value with the normalized x-axis coordinate of the operation point and then multiplying the addition result by the second coordinate scaling ratio, and the y-axis target canvas coordinate of the operation point is obtained by subtracting the normalized y-axis coordinate of the operation point from the set value and then multiplying the subtraction result by the second coordinate scaling ratio, and the x-axis target canvas coordinate and the y-axis target canvas coordinate of the operation point are combined to obtain the target canvas coordinates of the operation point on the target canvas.

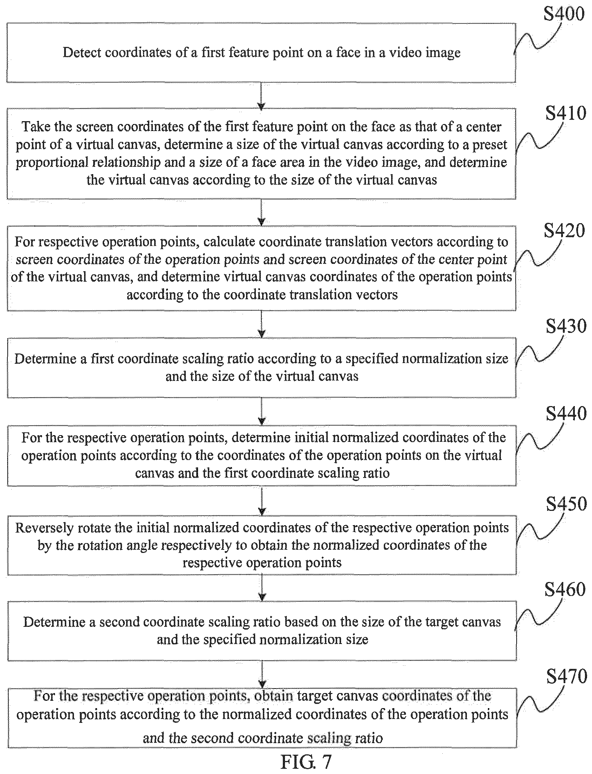

Alternatively, in the case where a rotation angle of a human face in the video image is not 0, FIG. 7 shows a flowchart of yet another method for converting the screen coordinates of the respective operation points into the target canvas coordinates provided according to an embodiment of the present disclosure. Referring to FIG. 7, the method may include:

> Step S400, detecting coordinates of a first feature point on a face in a video image.
> Step S410, taking the screen coordinates of the first feature point on the face as that of a center point of a virtual canvas, determining a size of the virtual canvas according to a preset proportional relationship and a size of a face area in the video image, and determining the virtual canvas according to the size of the virtual canvas.

In one example, the virtual canvas may be square, and the embodiments of the present disclosure may determine the virtual canvas by taking twice the width of the human face as the width of the virtual canvas, in which the coordinates of the nose bridge on the human face in the video image are that of the center point of the virtual canvas.

For example, assuming that the resolution of the screen is 720 * 1280, coordinates of the nose bridge on the human face in the video image are determined to be (360, 500), and the resolution of the width of the human face is determined to be 340 (which may be regarded as a width distance between the coordinate points of the left and right temples on the human face), then the coordinates (360, 500) of the nose bridge on the human face may be taken as that of the center of the virtual canvas, so as to obtain the virtual canvas twice the width of the human face (a 680 * 680 resolution). Alternatively, the step S400 and step S410 may be considered as an alternative implementation of the step S200 shown in FIG. 4, in which the rotation angle of the human face in the video image is not 0.

It should be noted that the steps S300 to S310 shown in FIG. 6 differ from the step S400 and the step S410 shown in FIG. 7 in that: the rotation angle of the human face in the video image of FIG. 6 is 0, whereas the rotation angle of the human face in the video image of FIG. 7 is not 0.

Step S420, for respective operation points, calculating coordinate translation vectors according to screen coordinates of the operation points and screen coordinates of the center point of the virtual canvas, and determining virtual canvas coordinates of the operation points according to the coordinate translation vectors.

In a particular implementation, the virtual canvas coordinates of an operation point are obtained by subtracting an x-axis coordinate of the center point of the virtual canvas from an x-axis screen coordinate of the operation point, and a y-axis coordinate of the center point of the virtual canvas from a y-axis screen coordinate of the operation points.

Alternatively, the step S420 may be considered as an implementation of the step S210 shown in FIG. 4, which may be referred to as the step S320 shown in FIG. 6.

Alternatively, if the face detection also supports Euler angle detection (the angles between the rotation angle of the face and the x, y, z axes in a three-dimensional space), after subtracting the x-axis coordinate of the center point of the virtual canvas from the x-axis screen coordinate of the operation point, and the y-axis coordinate of the center point of the virtual canvas from the y-axis screen coordinate of the operation points, the subtraction results are multiplied by a three-dimensional rotation matrix to obtain the coordinates of the operation point on the virtual canvas.

Step S430, determining a first coordinate scaling ratio according to a specified normalization size and the size of the virtual canvas.

Alternatively, for example, the first coordinate scaling ratio may be obtained by dividing the width of the normalized virtual canvas by the width of the virtual canvas as it is rendered.

Step S440, for the respective operation points, determining initial normalized coordinates of the operation points according to the coordinates of the operation points on the virtual canvas and the first coordinate scaling ratio.

Alternatively, for example, the initial normalized coordinates of the operation points are obtained by multiplying the coordinates of the operation points on the virtual canvas by the first coordinate scaling ratio.

Step S450, reversely rotating the initial normalized coordinates of the respective operation points by the rotation angle respectively to obtain the normalized coordinates of the respective operation points.

Alternatively, the embodiments of the present disclosure may determine a two-dimensional rotation matrix corresponding to the rotation angle, and for the respective operation points, the normalized coordinates of the respective operation points may be determined according to the initial normalized coordinates of the operation points and the two-dimensional rotation matrix; for example, the normalized coordinates of the operation points may be obtained by multiplying the initial normalized coordinates of the operation points by the two-dimensional rotation matrix.

The rotation angle of the human face in the video image is set to be $\theta$, and $M(\theta)$ represents the corresponding two-dimensional rotation matrix, and an example of a formula of the two-dimensional rotation matrix may be as follows:

$$\begin{bmatrix} x' \\ y' \\ 1 \end{bmatrix} = \begin{bmatrix} cos(\theta) & -sin(\theta) & 0 \\ sin(\theta) & cos(\theta) & 0 \\ 0 & 0 & 1 \end{bmatrix} \cdot \begin{bmatrix} x \\ y \\ 1 \end{bmatrix}$$

By way of example, assuming that the initial normalized coordinates of an operation point are (-0.706, 0.471), the normalized coordinates of the operation point may be obtained as follows:

$M(\theta)$ * (-0.706, 0.471); if $\theta$ is set to be 30°, the normalized coordinates are (-0.376, 0.761).

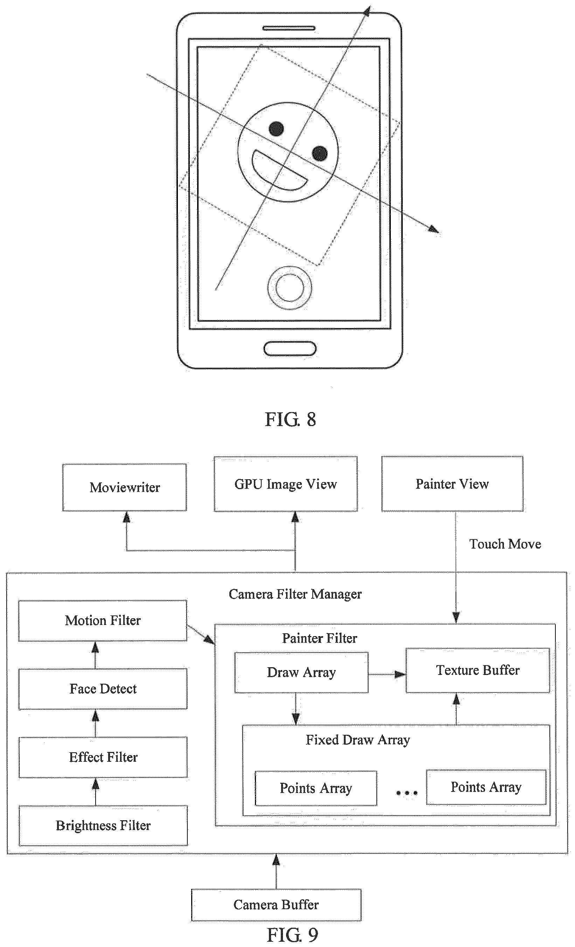

As shown in FIG. 8, due to the rotation angle of the face in the video image, the virtual canvas coordinates need to be rotated when the virtual canvas coordinates are normalized, which is equivalent to the rotation of the virtual canvas. The positive and negative directions of the rotation angle may be customized with reference to a center line of the video image, which are not limited by the embodiments of the present disclosure.

Alternatively, the steps S430 to S450 may be considered as an implementation of the step S220 of FIG. 4, and they are different from the steps S330 to S340 of FIG. 6 in that the method shown in FIG. 7 is based on the case where the rotation angle of the face of the video image is not 0, and the result of the step S340 of FIG. 6 may be considered as the initial normalized coordinates of the method shown in FIG. 7, based on which the method shown in FIG. 7 also requires reverse-rotation of the initial normalized coordinates of each operation point based on the rotation angle.

Step S460, determining a second coordinate scaling ratio based on the size of the target canvas and the specified normalization size.

Alternatively, the second coordinate scaling ratio may be obtained by dividing the width of the target canvas by the width of the normalized virtual canvas.

Step S470, for the respective operation points, obtaining target canvas coordinates of the operation points according to the normalized coordinates of the operation points and the second coordinate scaling ratio.

Specifically, the x-axis target canvas coordinates of the operation points are obtained by adding a set value with the normalized x-axis coordinates of the operation points and then multiplying the addition results by the second coordinate scaling ratio, and the y-axis target canvas coordinates of the operation points are obtained by subtracting the normalized y-axis coordinates of the operation points from the set value and then multiplying the subtraction results by the second coordinate scaling ratio, and the x-axis target canvas coordinates and the y-axis target canvas coordinates of the operation points are combined to obtain the target canvas coordinates of the operation points on the target canvas.

It should be noted that the embodiments of the present disclosure support processing in a two-dimensional coordinate system and also support processing in a three-dimensional coordinate system, and one of the differences between the two is that: compared with the two-dimensional coordinate system, when the screen coordinates of the operation points are converted into the coordinates of the virtual canvas in the three-dimensional coordinate system, a three-dimensional rotation matrix is multiplied on the basis of processing in the two-dimensional coordinate system, as shown in the steps S320 and S420.

It is shown above that under a scenario of drawing graffiti on a face in a video image, a virtual canvas serves as an intermediate state of coordinate conversion from screen coordinates of the respective operation points into target canvas coordinates, so as to achieve the purpose of diversity application of the human face; it should be noted that the coordinate conversion from the screen coordinates of the operation points to the target canvas coordinates through the virtual canvas is only an option, as an alternative: in the case of not drawing graffiti on a face in a video image, the embodiments of the present disclosure may also display a graffiti area corresponding to the size of the target canvas on the screen (alternatively, further, the position of the graffiti area may be moved and adjusted by the user operation, but with its size unchanged), such that the user may perform graffiti in the graffiti area to realize a direct conversion of the screen coordinates of the operation points into the target canvas coordinates ("direct" herein is relative to the indirect manner in which the virtual canvas is used as an intermediate state); correspondingly, the target canvas drawn with the graph may be superposed on the video image according to the position of the graffiti area in the video image.

Further, after the target canvas coordinates of the respective operation points on the screen are determined and the corresponding graph is drawn on the target canvas, the target canvas drawn with the graph may be added into a dynamic video image in a sticker manner, so as to achieve the effect that the target canvas drawn with the graph moves as the human face in the video image moves.

Alternatively, after drawing a graph on the target canvas according to the target canvas coordinates of the respective operation points, the target canvas drawn with the graph may be used as special effect materials of a sticker type and superposed on a video image; with openGL as an example, the embodiments of the present disclosure may input vertex coordinates and the rotation angle (corresponding to the rotation angle of the face in the video image) of the target canvas drawn with the graph to a vertex shader, and the vertex shader calculates the superposition position coordinates of the target canvas drawn with the graph on the video image according to the rotation angle and the vertex coordinates of the target canvas drawn with the graph, thereby superposing the target canvas drawn with the graph on the video image according to the superposition position coordinates; further, when the target canvas drawn with the graph is added to the face of the video image, if the video image is a dynamic video image and there is movement of the face, the target canvas drawn with the graph may be made to move as the face in the video image moves.

Alternatively, if the target canvas drawn with the graph is superposed on the video image in a three-dimensional coordinate system, a three-dimensional space sticker-to-video image superposition principle, such as a perspective projection technique, may be used.

Alternatively, the video image processing method provided by the embodiments of the present disclosure may exist in the form of a painter filter and may be added into a filter chain supporting the application of video recording, filters such as a peeling filter, a whitening filter, a human face detection filter, and a deformation filter also exist in the filter chain, and the video image processing method provided by the embodiments of the present disclosure may be added to the end of the filter chain in the form of a painter filter, and drawing graffiti on a video image is realized in a processing mode of a filter, and video image data after the graffiti is drawn superposed with the target canvas drawn with the graph may be output to a screen or written into a local video file for storage. The application framework incorporating the painter filter may be seen and referenced in FIG. 9.

According to the video image processing method provided by the embodiments of the present disclosure, a user may be supported to draw graffiti on a video image, a target canvas drawn with a graph and obtained based on the graffiti of the user may be used as special effect materials, the content of the special effect materials may be adjusted according to different graffiti operations of the user on a screen, such that the content of the special effect materials may be adjusted individually by the user, the content of the video special effects added on the video image is richer and more changeable, the limitation of using the special effect materials is reduced, and the flexibility of adding special effects to the video image is improved.

In the following description of a video image processing apparatus provided by the embodiments of the present disclosure, the video image processing apparatus described below may be considered as a program module set by a terminal to implement the video image processing method provided by the embodiments of the present disclosure. The contents of the video image processing apparatus described below may be referred to and in correspondence with the contents of the video image processing method described above.

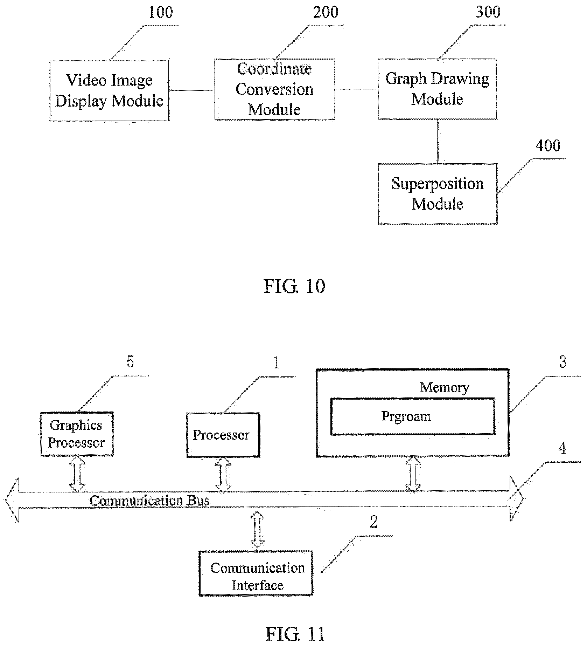

FIG. 10 is a block diagram of a video image processing apparatus applicable to a terminal, in particular to a GPU of the terminal, provided by an embodiment of the present disclosure, and referring to FIG. 10, the video image processing apparatus may include:

a video image display module 100 to display an acquired video image on a screen;
a coordinate conversion module 200 to detect respective operation points of a user on the screen and convert screen coordinates of the respective operation points into target canvas coordinates on a target canvas;
a graph drawing module 300 to draw a graph on the target canvas according to the target canvas coordinates of the respective operation points; and

a superposition module 400 to superpose the target canvas drawn with the graph on the video image.

Alternatively, the coordinate conversion module 200 is configured to convert the screen coordinates of the respective operation points into the target canvas coordinates on the target canvas, which specifically includes:

determining a virtual canvas according to facial features in the video image, in which a size of the virtual canvas is in a preset proportional relationship with a size of a face area in the video image;
mapping the screen coordinates of the respective operation points onto the virtual canvas to obtain virtual canvas coordinates of the respective operation points; and
mapping the virtual canvas coordinates of the respective operation points onto the target canvas to obtain the target canvas coordinates of the respective operation points on the target canvas.

Alternatively, the coordinate conversion module 200 is configured to determine the virtual canvas according to the facial features in the video image, which specifically includes:

detecting screen coordinates of a first feature point on a face in the video image;
taking the screen coordinates of the first feature point on the face as screen coordinates of a center point of the virtual canvas, determining the size of the virtual canvas according to the preset proportional relationship and the size of the face area in the video image, and determining the virtual canvas according to the size of the virtual canvas.

Alternatively, the coordinate conversion module 200 is configured to map the screen coordinates of the respective operation points onto the virtual canvas to obtain the virtual canvas coordinates of the respective operation points, which specifically includes:
for the respective operation points, converting the screen coordinates of the operation points into coordinates on the virtual canvas according to the screen coordinates of the operation points and screen coordinates of a center point of the virtual canvas to obtain the virtual canvas coordinates of the operation points.

Alternatively, in a two-dimensional coordinate system, the coordinate conversion module 200 is configured to convert the screen coordinates of the operation points into the coordinates on the virtual canvas according to the screen coordinates of the operation points and the screen coordinates of the center point of the virtual canvas, which specifically includes:

for the respective operation points, calculating coordinate translation vectors according to the screen coordinates of the operation points and the screen coordinates of the center point of the virtual canvas; and
determining the virtual canvas coordinates of the operation points according to the coordinate translation vectors.

Alternatively, in a three-dimensional coordinate system, the coordinate conversion module 200 is configured to convert the screen coordinates of the operation points into the coordinates on the virtual canvas according to the screen coordinates of the operation points and the screen coordinates of the center point of the virtual canvas, which specifically includes:
for the respective operation points, subtracting an x-axis coordinate of the center point of the virtual canvas from x-axis screen coordinates of the operation points, subtracting an y-axis coordinate of the center point of the virtual canvas from y-axis screen coordinates of the operation points, and multiplying the subtraction results by a three-dimensional rotation matrix to obtain the coordinates of the operation points on the virtual canvas.

Alternatively, the coordinate conversion module 200 is configured to map the virtual canvas coordinates of the respective operation points onto the target canvas to obtain the target canvas coordinates of the respective operation points, which specifically includes:

normalizing the virtual canvas coordinates of the operation points to obtain normalized coordinates of the operation points; and
mapping the normalized coordinates of the operation points onto the target canvas to obtain the target canvas coordinates of each operation points.

Alternatively, if a rotation angle of a human face in the video image is not 0, the coordinate conversion module 200 is configured to normalize the virtual canvas coordinates of the operation points to obtain the normalized coordinates of the operation points, which specifically includes:

determining a first coordinate scaling ratio according to a specified normalization size and the size of the virtual canvas;

13

for the operation points, determining initial normalized coordinates of the operation points according to the virtual canvas coordinates of the operation points and the first coordinate scaling ratio; and

reversely rotating the initial normalized coordinates of the operation points by the rotation angle respectively to obtain the normalized coordinates of the operation points.

Alternatively, the coordinate conversion module 200, when determining the first coordinate scaling ratio according to the specified normalization size and the size of the virtual canvas, may be particularly configured to: divide a width of the normalized virtual canvas by a width of the virtual canvas as it is rendered to obtain the first coordinate scaling.

Alternatively, the coordinate conversion module 200, when determining the initial normalized coordinates of the operation points according to the virtual canvas coordinates of the operation points and the first coordinate scaling ratio, may be particularly configured to: multiply the virtual canvas coordinates of the operation points by the first coordinate scaling ratio to obtain the initial normalized coordinates of the operation points.

Alternatively, the coordinate conversion module 200, when reversely rotating the initial normalized coordinates of the operation points by the rotation angle respectively to obtain the normalized coordinates of the operation points, may be particularly configured to: multiply the initial normalized coordinates of the operation points by a two-dimensional rotation matrix corresponding to the rotation angle to obtain the normalized coordinates of the operation points.

Alternatively, if the rotation angle of the human face in the video image is 0, the coordinate conversion module 200 is configured to normalize the virtual canvas coordinates of the operation points to obtain normalized coordinates of the operation points, which specifically includes:

determining a first coordinate scaling ratio according to a specified normalization size and the size of the virtual canvas; and

for the operation points, determining the normalized coordinates of the operation points according to the virtual canvas coordinates of the operation points and the first coordinate scaling ratio.

Alternatively, when the rotation angle of the human face in the video image is 0, the coordinate conversion module 200, when determining the normalized coordinates of the operation points according to the virtual canvas coordinates of the operation points and the first coordinate scaling ratio, may be particularly configured to: multiply the virtual canvas coordinates of the operation points by the first coordinate scaling ratio to obtain the normalized coordinates of the operation points.

Alternatively, the coordinate conversion module 200 is configured to map the normalized coordinates of the operation points onto the target canvas to obtain the target canvas coordinates of the operation points, which specifically includes:

determining a second coordinate scaling ratio according to a size of the target canvas and the specified normalization size; and

for the operation points, obtaining the target canvas coordinates of the operation points according to the normalized coordinates of the operation points and the second coordinate scaling ratio.

Alternatively, the coordinate conversion module 200, when determining the second coordinate scaling ratio according to the size of the target canvas and the specified normalization size, may be particularly configured to: divide the width of the target canvas by the width of the normalized virtual canvas to obtain the second coordinate scaling ratio.

Alternatively, the coordinate conversion module 200, when obtaining the target canvas coordinates of the operation points according to the normalized coordinates of the operation points and the second coordinate scaling ratio, may be particularly configured to:

for the operation point, add a set value with normalized x-axis coordinates of the operation points and then multiply addition results by the second coordinate scaling ratio to obtain x-axis target canvas coordinates of the operation points; subtract normalized y-axis coordinates of the operation points from the set value and multiply subtraction results by the second coordinate scaling ratio to obtain y-axis target canvas coordinates of the operation points; and combine the x-axis target canvas coordinates and the y-axis target canvas coordinates of the operation points to obtain the target canvas coordinates of the operation points on the target canvas.

Alternatively, the coordinate conversion module 200 is configured to detect the operation points of the user on the screen, which specifically includes:

in response to a user-triggered operation to enter a graffiti mode, detecting the operation points of the user on the screen.

Alternatively, the superposition module 400 is configured to superpose the target canvas drawn with the graph on the video image, which specifically includes:

inputting vertex coordinates on the target canvas drawn with the graph and the rotation angle of the face in the video image into a vertex shader, and calculating superposition position coordinates of the target canvas drawn with the graph on the video image by the vertex shader according to the rotation angle and the vertex coordinates; and superposing the target canvas drawn with the graph on the video image according to the superposition position coordinates, and enabling the target canvas drawn with the graph to move as the face in the video image moves.

Alternatively, in another implementation, the coordinate conversion module 200 is configured to detect the operation points of the user on the screen and convert the screen coordinates of the operation points into the target canvas coordinates on the target canvas, which may specifically include:
detecting the operation points of the user in a graffiti area corresponding to the size of the target canvas displayed on the screen, and converting the screen coordinates of the operation points in the graffiti area into target canvas coordinates of the target canvas.

Alternatively, in a three-dimensional coordinate system, the superposition module 400 may superpose the target canvas drawn with the graph on the video image using perspective projection techniques.

Alternatively, FIG. 11 shows a block diagram of hardware configuration of a terminal, and referring to FIG. 11, the terminal may include: at least one processor 1, at least one communication interface 2, at least one memory 3, at least one communication bus 4 and at least one graphics processor 5.

Alternatively, the communication interface 2 may be an interface of a communication module, such as an interface of a GSM (Global System for Mobile Communications) module.

The processor 1 may be a central processing unit CPU, or an Application Specific Integrated Circuit (ASIC), or one or more integrated circuits configured to implement the embodiments of the present disclosure.

The memory 3 may include high-speed RAM memory, and may also include non-volatile memory, such as at least one disk memory.

The memory 3 stores an executable program which may be executed by the processor or the graphics processor (in some special cases, the program corresponding to the video image processing method provided by the embodiments of the present disclosure may also be executed and implemented by the processor), and the program is specifically configured to:

display an acquired video image on a screen;
detect operation points of a user on the screen, and convert screen coordinates of the operation points into target canvas coordinates on a target canvas;
draw a graph on the target canvas according to the target canvas coordinates of the operation points; and
superpose the target canvas drawn with the graph on the video image.

Alternatively, the refinement function and the extended function of the program may be described with reference to corresponding parts above.

The embodiments of the present disclosure may further provide a storage medium storing a program adapted to be executed by a processor to:

display an acquired video image on a screen;
detect operation points of a user on the screen, and convert screen coordinates of the operation points into target canvas coordinates on a target canvas;
draw a graph on the target canvas according to the target canvas coordinates of the operation points; and
superpose the target canvas drawn with the graph on the video image.

The embodiments of the present disclosure further provide a computer program product including instructions that, when executed on a computer, cause the computer to perform the video image processing method described herein.

In this specification, various embodiments have been described progressively, with each embodiment being described with emphasis upon differences from the other embodiments, and with like reference to like parts throughout the various embodiments. For the apparatus disclosed by the embodiments, since the apparatus corresponds to the method disclosed by the embodiments, the description thereof is relatively simple, and the relevant parts may be explained with reference to the parts in the method.

Those skilled in the art would further appreciate that the elements and algorithm steps of the examples described in connection with the embodiments disclosed herein may be implemented as electronic hardware, computer software, or combinations thereof, and that the components and steps of the examples are described above generally in terms of their functionality in order to clearly illustrate the interchangeability of hardware and software. Whether such functionality is implemented as a hardware or software manner depends upon the particular application and design constraints imposed on the technical solution. Those skilled in the art may implement the described functionality in varying ways for each particular application, but such implementation is not intended to exceed the scope of the application.

The steps of a method or algorithm described in connection with the embodiments disclosed herein may be implemented directly in hardware, in a software module executed by a processor, or in a combination thereof. A software module may reside in a random access memory (RAM), memory, read only memory (ROM), electrically programmable ROM, electrically erasable programmable ROM, registers, hard disk, removable disk, CD-ROM, or any other form of storage medium known in the art.

The previous description of the disclosed embodiments is provided to enable any person skilled in the art to make or use the application.

**Claims**

1. A video image processing method applied to a terminal, comprising:

   displaying (S100) an acquired video image on a screen;
   detecting (S110) operation points of a user on the screen, and converting screen coordinates of the operation points into target canvas coordinates on a target canvas;
   drawing (S120) a graph on the target canvas according to the target canvas coordinates of the operation points; and
   superposing (S130) the target canvas drawn with the graph on the video image, **characterized in that**
   the video image superposed with the target canvas drawn with the graph is fully displayed on the screen, and the user clicking a start of a graffiti mode triggers an initialization of the target canvas and a requesting of a memory space in a memory for the target canvas, wherein a size of the requested memory space in the memory for the target canvas is determined according to a preset size of the target canvas and an amount of memory per pixel, wherein the preset size of the target canvas is a resolution size of the target canvas, wherein under the condition that the memory space requested for the target canvas in the memory is fixed, the virtual canvas is used as an intermediate state for converting the screen coordinates of the operation points into the target canvas coordinates on the target canvas, which comprises:

   determining a virtual canvas according to facial features in the video image, a size of the virtual canvas being in a preset proportional relationship with a size of a face area in the video image in which the virtual canvas is square and the width of the virtual canvas is twice the distance between the eyes of a face in the face area in the video image;
   mapping the screen coordinates of the operation points onto the virtual canvas to obtain virtual canvas coordinates of the operation points; and
   mapping the virtual canvas coordinates of the operation points onto the target canvas to obtain the target canvas coordinates of the operation points on the target canvas.

2. The video image processing method according to claim 1, wherein determining the virtual canvas according to the facial features in the video image comprises:

   detecting screen coordinates of a first feature point on a face in the video image;
   taking the screen coordinates of the first feature point on the face as screen coordinates of a center point of the virtual canvas, and determining the size of the virtual canvas according to the preset proportional relationship and the size of the face area in the video image, and
   determining the virtual canvas according to the size of the virtual canvas.

3. The video image processing method according to claim 1, wherein mapping the screen coordinates of the operation points onto the virtual canvas to obtain the virtual canvas coordinates of the operation points comprises:
   for the respective operation points, converting the screen coordinates of the operation points into coordinates on the virtual canvas according to the screen coordinates of the operation points and screen coordinates of a center point of the virtual canvas to obtain the virtual canvas coordinates of the operation points.

4. The video image processing method according to claim 3, wherein converting the screen coordinates of the operation points into the coordinates on the virtual canvas according to the screen coordinates of the operation points and the screen coordinates of the center point of the virtual canvas comprises:

   for the operation points, calculating coordinate translation vectors according to the screen coordinates of the operation points and the screen coordinates of the center point of the virtual canvas; and

determining the virtual canvas coordinates of the operation points according to the coordinate translation vectors.

5. The video image processing method according to claim 1, wherein mapping the virtual canvas coordinates of the operation points onto the target canvas to obtain the target canvas coordinates of the operation points comprises:

normalizing the virtual canvas coordinates of the operation points to obtain normalized coordinates of the operation points; and
mapping the normalized coordinates of the operation points onto the target canvas to obtain the target canvas coordinates of the operation points.

6. The video image processing method according to claim 5, wherein normalizing the virtual canvas coordinates of the operation points to obtain the normalized coordinates of the operation points comprises:

if a rotation angle of a face in the video image is not 0, determining a first coordinate scaling ratio according to a specified normalization size and the size of the virtual canvas;
for the operation points, determining initial normalized coordinates of the operation points according to the virtual canvas coordinates of the operation points and the first coordinate scaling ratio; and
reversely rotating the initial normalized coordinates of the operation points by the rotation angle respectively to obtain the normalized coordinates of the operation points.

7. The video image processing method according to claim 5, wherein normalizing the virtual canvas coordinates of the operation points to obtain the normalized coordinates of the operation points comprises:

if a rotation angle of a face in the video image is 0, determining a first coordinate scaling ratio according to a specified normalization size and the size of the virtual canvas; and
for the operation points, determining the normalized coordinates of the operation points according to the virtual canvas coordinates of the operation points and the first coordinate scaling ratio.

8. The video image processing method according to any one of claims 6 to 7, wherein mapping the normalized coordinates of the operation points onto the target canvas to obtain the target canvas coordinates of the operation points comprises:

determining a second coordinate scaling ratio according to a size of the target canvas and the specified normalization size; and
for the operation points, obtaining the target canvas coordinates of the operation points according to the normalized coordinates of the operation points and the second coordinate scaling ratio.

9. The video image processing method according to claim 1, wherein detecting the operation points of the user on the screen comprises:
in response to a user-triggered operation to enter a graffiti mode, detecting the operation points of the user on the screen.

10. The video image processing method according to claim 1, wherein superposing the target canvas drawn with the graph on the video image comprises:

inputting vertex coordinates on the target canvas drawn with the graph and a rotation angle of a face in the video image into a vertex shader, and calculating superposition position coordinates of the target canvas drawn with the graph on the video image by the vertex shader according to the rotation angle and the vertex coordinates; and
superposing the target canvas drawn with the graph on the video image according to the superposition position coordinates, and enabling the target canvas drawn with the graph to move as the face in the video image moves.

11. A video image processing apparatus, comprising:

a video image display module (100) to display an acquired video image on a screen;
a coordinate conversion module (200) to detect operation points of a user on the screen and convert screen coordinates of the operation points into target canvas coordinates on a target canvas;
a graph drawing module (300) to draw a graph on the target canvas according to the target canvas coordinates of the operation points; and

a superposition module (400) to superpose the target canvas drawn with the graph on the video image, **characterized in that**

the superposition module (400) is configured to superpose the target canvas drawn with the graph on the video image such that it is displayed on the screen,

the video image processing apparatus is configured **in that** a user clicking a start of a graffiti mode triggers an initialization of the target canvas and a requesting of a memory space in a memory for the target canvas, wherein a size of the requested memory space in the memory for the target canvas is determined according to a preset size of the target canvas and an amount of memory per pixel, wherein the preset size of the target canvas is a resolution size of the target canvas, and the coordinate conversion module (200) is configured, under the condition that the memory space requested for the target canvas in the memory is fixed, **in that** the virtual canvas is used as an intermediate state for converting the screen coordinates of the operation points into the target canvas coordinates on the target canvas, specifically comprising:

determining a virtual canvas according to facial features in the video image, a size of the virtual canvas being in a preset proportional relationship with a size of a face area in the video image in which the virtual canvas is square and the width of the virtual canvas is twice the distance between the eyes of a face in the face area in the video image;

mapping the screen coordinates of the operation points onto the virtual canvas to obtain the virtual canvas coordinates of the operation points; and

mapping the virtual canvas coordinates of the operation points onto the target canvas to obtain the target canvas coordinates of each operation point.

12. A terminal, comprising: a memory, a processor, and a graphics processor; the memory storing an executable program executable by the processor or the graphics processor, the program being configured to perform the video image processing method of any one of claims 1 to 10.

13. A storage medium for storing executable instructions which, when executed on a computer, cause the computer to perform the video image processing method of any one of claims 1 to 10.

**Patentansprüche**

1. Videobildverarbeitungsverfahren, das auf ein Endgerät angewandt wird, umfassend:

Anzeigen (S100) eines erfassten Videobildes auf einem Bildschirm;

Erfassen (S110) von Bedienungspunkten eines Benutzers auf dem Bildschirm und Umwandeln von Bildschirmkoordinaten der Bedienungspunkte in Zielleinwandkoordinaten auf einer Zielleinwand;

Zeichnen (S120) eines Graphen auf der Zielleinwand entsprechend den Zielleinwandkoordinaten der Bedienungspunkte; und

Überlagern (S130) der mit dem Graphen gezeichneten Zielleinwand auf dem Videobild, **dadurch gekennzeichnet, dass**

das Videobild, das der mit dem Graphen gezeichneten Zielleinwand überlagert ist, vollständig auf dem Bildschirm angezeigt wird, und

der Benutzer durch Anklicken eines Starts eines Graffiti-Modus eine Initialisierung der Zielleinwand und eine Anforderung eines Speicherplatzes in einem Speicher für die Zielleinwand auslöst, wobei eine Größe des angeforderten Speicherplatzes in dem Speicher für die Zielleinwand gemäß einer voreingestellten Größe der Zielleinwand und einer Speichermenge pro Pixel bestimmt wird, wobei die voreingestellte Größe der Zielleinwand eine Auflösungsgröße der Zielleinwand ist, wobei unter der Bedingung, dass der für die Zielleinwand in dem Speicher angeforderte Speicherplatz festgelegt ist, die virtuelle Leinwand als ein Zwischenzustand zum Umwandeln der Bildschirmkoordinaten der Bedienungspunkte in die Zielleinwandkoordinaten auf der Zielleinwand verwendet wird, was umfasst:

Bestimmen einer virtuellen Leinwand entsprechend den Gesichtsmerkmalen in dem Videobild, wobei eine Größe der virtuellen Leinwand in einem vorgegebenen proportionalen Verhältnis zu einer Größe eines Gesichtsbereichs in dem Videobild steht, in dem die virtuelle Leinwand quadratisch ist und die Breite der virtuellen Leinwand doppelt so groß ist wie der Abstand zwischen den Augen eines Gesichts in dem Gesichtsbereich in dem Videobild;

Abbilden der Bildschirmkoordinaten der Bedienungspunkte auf die virtuelle Leinwand, um virtuelle Leinwandkoordinaten der Bedienungspunkte zu erhalten; und

Abbilden der virtuellen Leinwandkoordinaten der Bedienungspunkte auf die Zielleinwand, um die Zielleinwandkoordinaten der Bedienungspunkte auf der Zielleinwand zu erhalten.

**2.** Videobildverarbeitungsverfahren nach Anspruch 1, wobei das Bestimmen der virtuellen Leinwand gemäß den Gesichtsmerkmalen im Videobild umfasst:

Erkennen der Bildschirmkoordinaten eines ersten Merkmalspunktes auf einem Gesicht im Videobild;

Verwenden der Bildschirmkoordinaten des ersten Merkmalspunkts auf dem Gesicht als Bildschirmkoordinaten eines Mittelpunkts der virtuellen Leinwand, und Bestimmen der Größe der virtuellen Leinwand gemäß der voreingestellten proportionalen Beziehung und der Größe des Gesichtsbereichs im Videobild, und

Bestimmen der virtuellen Leinwand entsprechend der Größe der virtuellen Leinwand.

**3.** Videobildverarbeitungsverfahren nach Anspruch 1, wobei das Abbilden der Bildschirmkoordinaten der Bedienungspunkte auf die virtuelle Leinwand zum Erhalten der virtuellen Leinwandkoordinaten der Bedienungspunkte umfasst: für die jeweiligen Bedienungspunkte, Umwandeln der Bildschirmkoordinaten der Betriebspunkte in Koordinaten auf der virtuellen Leinwand entsprechend den Bildschirmkoordinaten der Betriebspunkte und den Bildschirmkoordinaten eines Mittelpunkts der virtuellen Leinwand, um die virtuellen Leinwandkoordinaten der Betriebspunkte zu erhalten.

**4.** Videobildverarbeitungsverfahren nach Anspruch 3, wobei das Umwandeln der Bildschirmkoordinaten der Bedienungspunkte in die Koordinaten auf der virtuellen Leinwand gemäß den Bildschirmkoordinaten der Bedienungspunkte und den Bildschirmkoordinaten des Mittelpunkts der virtuellen Leinwand umfasst:

Berechnen von Koordinatenverschiebungsvektoren für die Bedienungspunkte entsprechend den Bildschirmkoordinaten der Bedienungspunkte und den Bildschirmkoordinaten des Mittelpunkts der virtuellen Leinwand; und

Bestimmen der virtuellen Leinwandkoordinaten der Bedienungspunkte entsprechend den Koordinatenverschiebungsvektoren.

**5.** Videobildverarbeitungsverfahren nach Anspruch 1, wobei das Abbilden der virtuellen Leinwandkoordinaten der Bedienungspunkte auf die Zielleinwand, um die Zielleinwandkoordinaten der Bedienungspunkte zu erhalten, umfasst:

Normalisieren der Koordinaten der virtuellen Leinwand der Bedienungspunkte, um normalisierte Koordinaten der Bedienungspunkte zu erhalten; und

Abbilden der normalisierten Koordinaten der Bedienungspunkte auf die Zielleinwand, um die Zielleinwandkoordinaten der Bedienungspunkte zu erhalten.

**6.** Videobildverarbeitungsverfahren nach Anspruch 5, wobei das Normalisieren der virtuellen Leinwandkoordinaten der Bedienungspunkte zum Erhalten der normalisierten Koordinaten der Bedienungspunkte umfasst:

wenn ein Drehwinkel eines Gesichts im Videobild nicht 0 ist, Bestimmen eines ersten Koordinatenskalierungsverhältnisses gemäß einer angegebenen Normalisierungsgröße und der Größe der virtuellen Leinwand;

Bestimmen von anfänglichen normalisierten Koordinaten der Bedienungspunkte für die Bedienungspunkte gemäß den virtuellen Leinwandkoordinaten der Bedienungspunkte und dem ersten Koordinatenskalierungsverhältnis; und

Umkehren der anfänglichen normalisierten Koordinaten der Bedienungspunkte um den jeweiligen Drehwinkel, um die normalisierten Koordinaten der Bedienungspunkte zu erhalten.

**7.** Videobildverarbeitungsverfahren nach Anspruch 5, wobei das Normalisieren der virtuellen Leinwandkoordinaten der Bedienungspunkte zum Erhalten der normalisierten Koordinaten der Bedienungspunkte umfasst:

wenn ein Drehwinkel eines Gesichts in dem Videobild 0 ist, Bestimmen eines ersten Koordinatenskalierungsverhältnisses gemäß einer spezifizierten Normalisierungsgröße und der Größe der virtuellen Leinwand; und

für die Bedienungspunkte, Bestimmen der normalisierten Koordinaten der Bedienungspunkte entsprechend den virtuellen Leinwandkoordinaten der Bedienungspunkte und dem ersten Koordinatenskalierungsverhältnis.

8. Videobildverarbeitungsverfahren nach einem der Ansprüche 6 bis 7, wobei das Abbilden der normalisierten Koordinaten der Bedienungspunkte auf die Zielleinwand zum Erhalten der Zielleinwandkoordinaten der Bedienungspunkte umfasst:

   Bestimmen eines zweiten Koordinatenskalierungsverhältnisses gemäß einer Größe der Zielleinwand und der spezifizierten Normalisierungsgröße; und
   für die Bedienungspunkte, Ermitteln der Zielkoordinaten der Bedienungspunkte gemäß den normierten Koordinaten der Bedienungspunkte und dem zweiten Koordinatenskalierungsverhältnis zu.

9. Videobildverarbeitungsverfahren nach Anspruch 1, wobei das Erfassen der Bedienungspunkte des Benutzers auf dem Bildschirm umfasst:
   als Reaktion auf eine vom Benutzer ausgelöste Betätigung zum Aufrufen eines Graffiti-Modus, Erfassen der Bedienungspunkte des Benutzers auf dem Bildschirm.

10. Videobildverarbeitungsverfahren nach Anspruch 1, wobei das Überlagern der mit dem Graphen gezeichneten Zielleinwand auf dem Videobild umfasst:

    Eingeben von Scheitelpunktkoordinaten auf der mit dem Graphen gezeichneten Zielleinwand und eines Drehwinkels einer Fläche in dem Videobild in einen Scheitelpunkt-Shader, und Berechnen von Überlagerungspositionskoordinaten der mit dem Graphen gezeichneten Zielleinwand auf dem Videobild durch den Scheitelpunkt-Shader gemäß dem Drehwinkel und den Scheitelpunktkoordinaten; und
    Überlagern der mit dem Graphen gezeichneten Zielleinwand auf dem Videobild gemäß den Koordinaten der Überlagerungsposition, und Ermöglichen der Bewegung der mit dem Graphen gezeichneten Zielleinwand, wenn sich das Gesicht im Videobild bewegt.

11. Videobildverarbeitungsvorrichtung, umfassend:

    ein Videobildanzeigemodul (100) zur Anzeige eines erfassten Videobildes auf einem Bildschirm;
    ein Koordinatenumwandlungsmodul (200) zum Erfassen von Bedienungspunkten eines Benutzers auf dem Bildschirm und zum Umwandeln von Bildschirmkoordinaten der Bedienungspunkte in Zielleinwandkoordinaten auf einer Zielleinwand;
    ein Modul zum Zeichnen von Graphen (300), um einen Graphen auf der Zielleinwand entsprechend den Zielleinwandkoordinaten der Bedienungspunkte zu zeichnen; und
    ein Überlagerungsmodul (400) zum Überlagern der mit dem Graphen gezeichneten Zielleinwand über das Videobild, **dadurch gekennzeichnet, dass**
    das Überlagerungsmodul (400) so konfiguriert ist, dass es die mit dem Graphen gezeichnete Zielleinwand auf dem Videobild überlagert, so dass sie auf dem Bildschirm angezeigt wird,
    die Videobildverarbeitungsvorrichtung so konfiguriert ist, dass ein Benutzer, der auf einen Start eines Graffitimodus klickt, eine Initialisierung der Zielleinwand und ein Anfordern eines Speicherplatzes in einem Speicher für die Zielleinwand auslöst, wobei eine Größe des angeforderten Speicherplatzes in dem Speicher für die Zielleinwand gemäß einer voreingestellten Größe der Zielleinwand und einer Speichermenge pro Pixel bestimmt wird, wobei die voreingestellte Größe der Zielleinwand eine Auflösungsgröße der Zielleinwand ist, und das Koordinatenumwandlungsmodul (200) unter der Bedingung, dass der für die Zielleinwand in dem Speicher angeforderte Speicherplatz fest ist, so konfiguriert ist, dass die virtuelle Leinwand als ein Zwischenzustand zum Umwandeln der Bildschirmkoordinaten der Bedienungspunkte in die Zielleinwandkoordinaten auf der Zielleinwand verwendet wird, insbesondere umfassend:

    Bestimmen einer virtuellen Leinwand entsprechend Gesichtsmerkmalen in dem Videobild, wobei eine Größe der virtuellen Leinwand in einem voreingestellten proportionalen Verhältnis zu einer Größe eines Gesichtsbereichs in dem Videobild steht, in dem die virtuelle Leinwand quadratisch ist und die Breite der virtuellen Leinwand dem doppelten Abstand zwischen den Augen eines Gesichts in dem Gesichtsbereich in dem Videobild entspricht;
    Abbilden der Bildschirmkoordinaten der Bedienungspunkte auf die virtuelle Leinwand, um die Koordinaten der Bedienungspunkte auf der virtuellen Leinwand zu erhalten; und
    Abbilden der virtuellen Leinwandkoordinaten der Bedienungspunkte auf die Zielleinwand, um die Zielleinwandkoordinaten jedes Bedienungspunktes zu erhalten.

12. Endgerät, das umfasst: einen Speicher, einen Prozessor und einen Grafikprozessor; wobei der Speicher ein ausführbares Programm speichert, das von dem Prozessor oder dem Grafikprozessor ausgeführt werden kann, wobei das Programm so konfiguriert ist, dass es das Videobildverarbeitungsverfahren nach einem der Ansprüche 1 bis 10 ausführt.

13. Speichermedium zum Speichern von ausführbaren Befehlen, die, wenn sie auf einem Computer ausgeführt werden, den Computer veranlassen, das Videobildverarbeitungsverfahren nach einem der Ansprüche 1 bis 10 auszuführen.

**Revendications**

1. Procédé de traitement d'image vidéo appliqué à un terminal, consistant à:

afficher (S100) une image vidéo acquise sur un écran;
détecter (S110) des points d'opération d'un utilisateur sur un écran, et convertir les coordonnées d'écran des points d'opération en coordonnées de canevas cible sur un canevas cible;
dessiner (S120) un graphe sur le canevas cible conformément aux coordonnées de canevas cible des points d'opération; et
superposer (S130) le canevas cible dessiné avec le graphe sur l'image vidéo, **caractérisé en ce que** l'image vidéo superposée avec le canevas cible dessiné avec le graphe est complètement affichée sur l'écran, et l'utilisateur qui clique sur un début d'un mode graffiti déclenche un lancement du canevas cible et d'une demande d'un espace de mémoire dans une mémoire pour le canevas cible, dans lequel une taille de l'espace de mémoire requis dans la mémoire pour le canevas cible est déterminée conformément à une taille prédéfinie du canevas cible et à une quantité de mémoire par pixel, dans lequel la taille prédéfinie du canevas cible est une taille de résolution du canevas cible, dans lequel à condition que l'espace de mémoire requis pour le canevas cible dans la mémoire soit fixé, le canevas virtuel est utilisé comme un état intermédiaire pour convertir les coordonnées d'écran des points d'opération en coordonnées de canevas cible sur le canevas cible, qui consiste à:

déterminer un canevas virtuel conformément à des caractéristiques de visage dans l'image vidéo, une taille du canevas virtuel étant dans une relation proportionnelle prédéfinie avec une taille d'une zone de visage dans l'image vidéo dans laquelle le canevas virtuel est carré et la largeur du canevas virtuel est deux fois la distance entre les yeux d'un visage dans la zone de visage dans l'image vidéo;
mettre en correspondance les coordonnées d'écran des points d'opération sur le canevas virtuel pour obtenir les coordonnées de canevas virtuel des points d'opération; et
mettre en correspondance les coordonnées de canevas virtuel des points d'opération sur le canevas cible pour obtenir les coordonnées de canevas cible des points d'opération sur le canevas cible.

2. Procédé de traitement d'image vidéo selon la revendication 1, dans lequel la détermination du canevas virtuel conformément aux caractéristiques faciales dans l'image vidéo consiste à:

détecter des coordonnées d'écran d'un premier point caractéristique sur un visage dans l'image vidéo;
prendre les coordonnées d'écran du premier point caractéristique sur le visage en tant que coordonnées d'écran d'un point central du canevas virtuel, et déterminer la taille du canevas virtuel conformément à la relation proportionnelle virtuelle et à la taille de la zone de visage dans l'image vidéo, et
déterminer le canevas virtuel conformément à la taille du canevas virtuel.

3. Procédé de traitement d'image vidéo selon la revendication 1, dans lequel la mise en correspondance des coordonnées d'écran des points d'opération sur le canevas virtuel pour obtenir les coordonnées de canevas virtuel des points d'opération consiste à:
pour les points d'opération respectifs, convertir les coordonnées d'écran des points d'opération en coordonnées sur le canevas virtuel conformément aux coordonnées d'écran des points d'opération et des coordonnées d'écran d'un point central du canevas virtuel pour obtenir les coordonnées de canevas virtuel des points d'opération.

4. Procédé de traitement d'image vidéo selon la revendication 3, dans lequel la conversion des coordonnées d'écran des points d'opération en coordonnées sur le canevas virtuel conformément aux coordonnées d'écran des points d'opération et des coordonnées d'écran du point central du canevas virtuel consiste à:

pour les points d'opération, calculer les vecteurs de translation de coordonnées conformément aux coordonnées d'écran des points d'opération et aux coordonnées d'écran du point central du canevas virtuel; et

déterminer les coordonnées de canevas virtuel des points d'opération conformément aux vecteurs de translation de coordonnées.

5. Procédé de traitement d'image vidéo selon la revendication 1, dans lequel la mise en correspondance des coordonnées de canevas virtuel des points d'opération sur le canevas cible pour obtenir les coordonnées de canevas cible des points d'opération consistant à:

normaliser les coordonnées de canevas virtuel des points d'opération pour obtenir les coordonnées normalisées des points d'opération; et
mettre en correspondance les coordonnées normalisées des points d'opération sur le canevas cible pour obtenir les coordonnées de canevas cible des points d'opération.

6. Procédé de traitement d'image vidéo selon la revendication 5, dans lequel la normalisation des coordonnées de canevas virtuel des points d'opération pour obtenir les coordonnées normalisées des point d'opération consiste à:

si un angle de rotation d'un visage dans l'image vidéo n'est pas 0, déterminer un premier rapport d'échelle de coordonnées conformément à une taille de normalisation spécifiée et à la taille du canevas virtuel;
pour les points d'opération, déterminer des coordonnées normalisées initiales des points d'opération conformément aux coordonnées de canevas virtuel des points d'opération et du premier rapport d'échelle de coordonnées; et
faire tourner à l'inverse les coordonnées normalisées initiales des points d'opération par l'angle de rotation respectivement pour obtenir les coordonnées normalisées des points d'opération.

7. Procédé de traitement d'image vidéo selon la revendication 5, dans lequel la normalisation des coordonnées de canevas virtuel des points d'opération pour obtenir les coordonnées normalisées des point d'opération consiste à:

si un angle de rotation d'un visage dans l'image vidéo est 0, déterminer un premier rapport d'échelle de coordonnées conformément à une taille de normalisation spécifiée et à la taille du canevas virtuel; et
pour les points d'opération, déterminer les coordonnées normalisées initiales des points d'opération conformément aux coordonnées de canevas virtuel des points d'opération et du premier rapport d'échelle de coordonnées.

8. Procédé de traitement d'image vidéo selon l'une quelconque des revendications 6 à 7, dans lequel la mise en correspondance des coordonnées normalisées des points d'opération sur le canevas cible pour obtenir les coordonnées de canevas cible des points d'opération consistant à:

déterminer un second rapport d'échelle de coordonnées conformément à une taille du canevas cible et de la taille de normalisation spécifiée; et
pour les points d'opération, obtenir les coordonnées de canevas cible des points d'opération conformément aux coordonnées normalisées des points d'opération et du second rapport d'échelle de coordonnées.

9. Procédé de traitement d'image vidéo selon la revendication 1, dans lequel la détection des points d'opération de l'utilisateur sur l'écran consiste à:
en réponse à une opération déclenché par l'utilisateur pour entrer en mode graffiti, détecter les points d'opération de l'utilisateur sur l'écran.

10. Procédé de traitement d'image vidéo selon la revendication 1, dans lequel la superposition du canevas cible dessiné avec le graphe sur l'image vidéo consiste à:

entrer les coordonnées de sommet sur le canevas cible dessiné avec le graphe et un angle de rotation d'un visage dans l'image vidéo dans un nuanceur de sommet, et calculer les coordonnées de position de superposition du canevas cible dessiné avec le graphe sur l'image vidéo par le nuanceur de sommet conformément à l'angle de rotation et aux coordonnées de sommet; et
superposer le canevas cible dessiné avec le graphe sur l'image vidéo conformément aux coordonnées de position de superposition et permettre au canevas cible dessiné avec le graphe de se déplacer à mesure que le visage dans l'image vidéo bouge.

11. Appareil de traitement d'image vidéo comprenant:

un module d'affichage d'image vidéo (100) pour afficher une image vidéo acquise sur un écran;

un module de conversion de coordonnées (200) pour détecter des points d'opération d'un utilisateur sur l'écran et pour convertir les coordonnées d'écran des points d'opération en coordonnées de canevas cible sur un canevas cible;

un module de dessin de graphe (300) pour dessiner un graphe sur le canevas cible conformément aux coordonnées de canevas cible des points d'opération; et

un module de superposition (400) pour superposer le canevas cible dessiné avec le graphe sur l'image vidéo, **caractérisé en ce que**

le module de superposition (400) est conçu pour superposer le canevas cible dessiné avec le graphe sur l'image vidéo de sorte qu'il soit affiché sur l'écran,

l'appareil de traitement d'image vidéo est conçu **en ce qu'**un utilisateur qui clique sur un début d'un mode graffiti déclenche un lancement du canevas cible et d'une demande d'un espace de mémoire dans une mémoire pour le canevas cible, dans lequel une taille de l'espace de mémoire requis dans la mémoire pour le canevas cible est déterminée conformément à une taille prédéfinie du canevas cible et à une quantité de mémoire par pixel, dans lequel la taille prédéfinie du canevas cible est une taille de résolution du canevas cible, et le module de conversion de coordonnées (200) est conçu, à condition que l'espace de mémoire requis pour le canevas cible dans la mémoire soit fixe, **en ce que** le canevas virtuel est utilisé comme un état intermédiaire pour convertir les coordonnées d'écran des points d'opération en coordonnées de canevas cible sur le canevas cible, qui consiste en particulier à:

déterminer un canevas virtuel conformément à des caractéristiques de visage dans l'image vidéo, une taille du canevas virtuel étant dans une relation proportionnelle prédéfinie avec une taille d'une zone de visage dans l'image vidéo dans laquelle le canevas virtuel est carré et la largeur du canevas virtuel est deux fois la distance entre les yeux d'un visage dans la zone de visage dans l'image vidéo;

mettre en correspondance les coordonnées d'écran des points d'opération sur le canevas virtuel pour obtenir les coordonnées de canevas virtuel des points d'opération; et

mettre en correspondance les coordonnées de canevas virtuel des points d'opération sur le canevas cible pour obtenir les coordonnées de canevas cible de chaque point d'opération.

12. Terminal, comprenant : une mémoire, un processeur, et un processeur graphe; la mémoire stockant un programme exécutable pouvant être exécuté par le processeur ou par le processeur graphe, le programme étant conçu pour exécuter le procédé de traitement d'image vidéo selon l'une quelconque des revendications 1 à 10.

13. Support de stockage destiné à stocker des instructions exécutables qui, lorsqu'elles sont exécutées sur un ordinateur, amènent l'ordinateur à exécuter le procédé de traitement d'image vidéo selon l'une quelconque des revendications 1 à 10.

**FIG. 1**

**FIG. 2**

FIG. 3

Determine a virtual canvas according to facial features in the video image — S200

Map the screen coordinates of the respective operation points onto the virtual canvas to obtain virtual canvas coordinates of the respective operation points — S210

Normalize the virtual canvas coordinates of the respective operation points to obtain normalized coordinates of the respective operation points — S220

Map the normalized coordinates of the respective operation points onto the target canvas to obtain the target canvas coordinates of the respective operation points — S230

FIG. 4

FIG. 5

S300

Detect screen coordinates of a first feature point on a face in the video image

S310

Take the screen coordinates of the first feature point as that of a center point of the virtual canvas, determine the size of the virtual canvas according to the preset proportional relationship and the size of the face area in the video image, and determine the virtual canvas according to the size of the virtual canvas

S320

For the respective operation points, calculate coordinate translation vectors according to the screen coordinates of the respective operation points and the screen coordinates of the center point of the virtual canvas, and then determine the virtual canvas coordinates of the operation points according to the coordinate translation vectors

S330

Determine a first coordinate scaling ratio according to a specified normalization size and the size of the virtual canvas

S340

For the respective operation points, determine normalized coordinates of the respective operation points according to the virtual canvas coordinates of the operation points and the first coordinate scaling ratio

S350

Determine a second coordinate scaling ratio according to a size of a target canvas and the specified normalization size

S360

For the respective operation points, obtain the target canvas coordinates of the operation points according to the normalized coordinates of the operation points and the second coordinate scaling ratio

FIG. 6

S400

Detect coordinates of a first feature point on a face in a video image

S410

Take the screen coordinates of the first feature point on the face as that of a center point of a virtual canvas, determine a size of the virtual canvas according to a preset proportional relationship and a size of a face area in the video image, and determine the virtual canvas according to the size of the virtual canvas

S420

For respective operation points, calculate coordinate translation vectors according to screen coordinates of the operation points and screen coordinates of the center point of the virtual canvas, and determine virtual canvas coordinates of the operation points according to the coordinate translation vectors

S430

Determine a first coordinate scaling ratio according to a specified normalization size and the size of the virtual canvas

S440

For the respective operation points, determine initial normalized coordinates of the operation points according to the coordinates of the operation points on the virtual canvas and the first coordinate scaling ratio

S450

Reversely rotate the initial normalized coordinates of the respective operation points by the rotation angle respectively to obtain the normalized coordinates of the respective operation points

S460

Determine a second coordinate scaling ratio based on the size of the target canvas and the specified normalization size

S470

For the respective operation points, obtain target canvas coordinates of the operation points according to the normalized coordinates of the operation points and the second coordinate scaling ratio

FIG. 7

FIG. 8

FIG. 9

EP 3 713 220 B1

FIG. 10

FIG. 11

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711124135
- EP 2394714 A1
- WO 2016069669 A2